# EUROPÄISCHE PATENTANMELDUNG

(11) **EP 0 715 987 A1**
(43) Veröffentlichungstag der Anmeldung: **12.06.1996**
(21) Anmeldenummer: 95116944.0
(22) Anmeldetag: 27.10.1995
(51) Int. Cl.: B60P 3/00

(54) **Reff, insbesondere Seitenreff**

(30) Priorität: 08.12.1994 DE 9419674 U
(71) Anmelder: Goebel, Burckhard, D-37697 Meinbrexen (DE)
(72) Erfinder: Goebel, Burckhard, D-37697 Meinbrexen (DE)
(74) Vertreter: Walther, Robert, Dipl.-Ing. Walther, Walther & Hinz, Patentanwälte - European Patent Attorneys

(57) **Zusammenfassung**

Reff, insbesondere Seitenreff, für ein Fahrzeug zur Aufnahme von plattenförmigen Gegenständen, z. B. Glasscheiben, wobei das Reff (4) relativ zum Fahrzeug (1) absenkbar von dem Fahrzeug (1) aufnehmbar ist.

## Beschreibung

Die Erfindung betrifft ein Reff, insbesondere ein Seitenreff, für ein Fahrzeug zur Aufnahme von plattenförmigen Gegenständen, z. B. Glasscheiben.

Ein sogenanntes Seitenreff befindet sich seitlich am Fahrzeug parallel zur Fahrzeuglängsachse und ist mit dem Fahrzeugsrahmen verbunden. Im einzelnen zeichnet sich ein Reff durch ein im Querschnitt L-förmiges Gestell aus, wobei der kurze Schenkel unter Bildung eines Winkels von etwa 90° zum langen Schenkel, nach außen absteht. Auf dem kurzen Schenkel des L-förmigen Gestells des Seitenreffs stehen die Glasscheiben auf und lehnen sich mit ihrer Fläche an dem langen Schenkel an. Vor Sicherung der Glasscheiben während des Transports sind am Seitenreff Bügel oder ähnliche Mittel vorgesehen, die als Transportsicherung die Glasscheiben im gesicherten Zustand überspannen.

Es ist bekannt, daß insbesondere große Glasscheiben ein erhebliches Gewicht aufweisen; das Entladen derartiger Glasscheiben erfolgt auf der Baustelle im wesentlichen manuell. D. h. aber auch, daß die Glasscheiben von Hand vom Reff heruntergehoben werden müssen, was umso aufwendiger ist, je größer der Abstand des Reffs vom Boden ist, und je größer und damit schwerer die Glasscheiben sind.

Der Erfindung liegt daher die Aufgabe zugrunde, ein Reff, insbesondere ein Seitenreff zu schaffen, das die Handhabung der Glasscheiben erleichtert.

Die Aufgabe wird erfindungsgemäß dadurch gelöst, daß das Reff relativ zum Fahrzeug absenkbar von dem Fahrzeug aufnehmbar ist. D. h., daß für den Transport der Glasscheiben das Reff den erforderlichen Abstand zum Boden aufweist, jedoch zum Abladen abgesenkt werden kann.

Im einzelnen ist vorgesehen, daß das Fahrzeug ein Hubgestell aufweist, das mit dem Reff in Verbindung steht. Das Hubgestell, das insbesondere auf der Pritsche des Fahrzeugs angeordnet ist, besitzt Teleskopstützen und eine Hubeinrichtung, beispielsweise einen Kolbenzylinderantrieb. Um zu verhindern, daß sich das Hubgestell während des Transportes unbeabsichtigt absenkt, ist vorgesehen, daß die Teleskopstützen, beispielsweise durch einen Bolzen, verriegelbar sind.

Eine besondere Ausführungsform eines Reffs, und insbesondere eines Seitenreffs, zeichnet sich dadurch aus, daß das Seitenreff gegenüber der vertikalen nach außen verschwenkbar absenkbar ist. D. h., daß beim Absenken des Reffs der Winkel des Reffs zur Vertikalen vergrößert wird, so daß die Andruckkraft aufgrund des Eigengewichts der Glasscheibe auf die vertikalen Schenkel des Reffs zunimmt, mithin somit auch keine Gefahr besteht, daß nach Abnahme der Transportsicherung die Glasscheiben umfallen. Um eine Verschwenkung des Reffs während des Absenkvorgangs relativ zur Vertikalen zu erreichen, ist ein Schwenkarm vorgesehen, der einerseits mit dem Seitenreff, und andererseits mit dem Fahrzeug in Verbindung steht. Zur Einstellung des Schwenkwinkels ist der Schwenkarm in seiner Länge veränderlich ausgebildet, was beispielsweise durch eine Gewindehülse bewerkstelligt werden kann, in die zu beiden Seiten ein Gewindebolzen eindrehbar ist. Um eine Verschwenkung während des Absenkvorgangs zu realisieren, ist einerseits das Reff gelenkig mit dem Hubgestell und andererseits der Schwenkarm gelenkig mit dem Fahrzeug und dem Reff verbunden.
- Fig.1: zeigt die Vorrichtung in einer Seitenansicht auf das Fahrzeug;
- Fig.2: zeigt eine Ansicht von hinten;
- Fig.3: zeigt ebenfalls eine Ansicht von hinten, wobei das Reff abgesenkt ist.

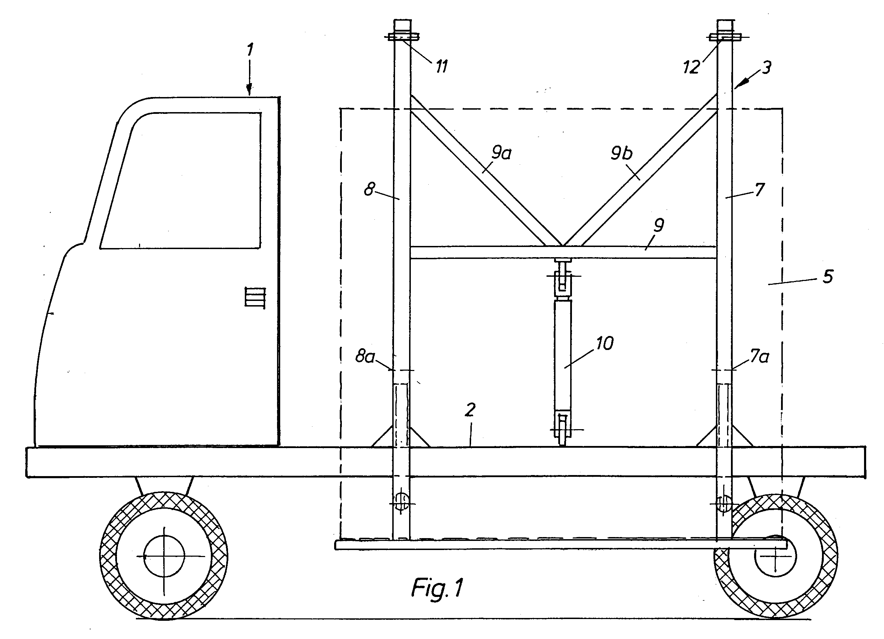

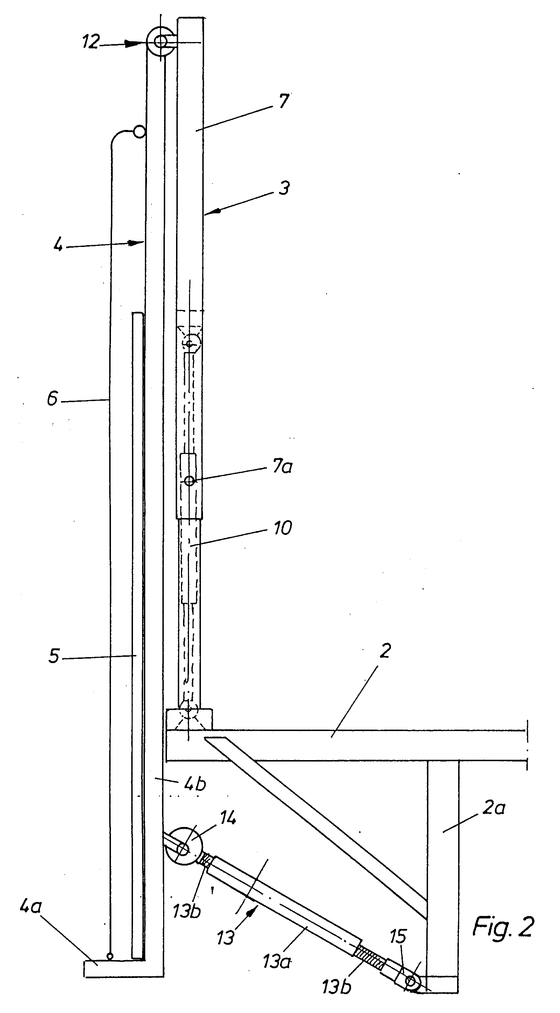

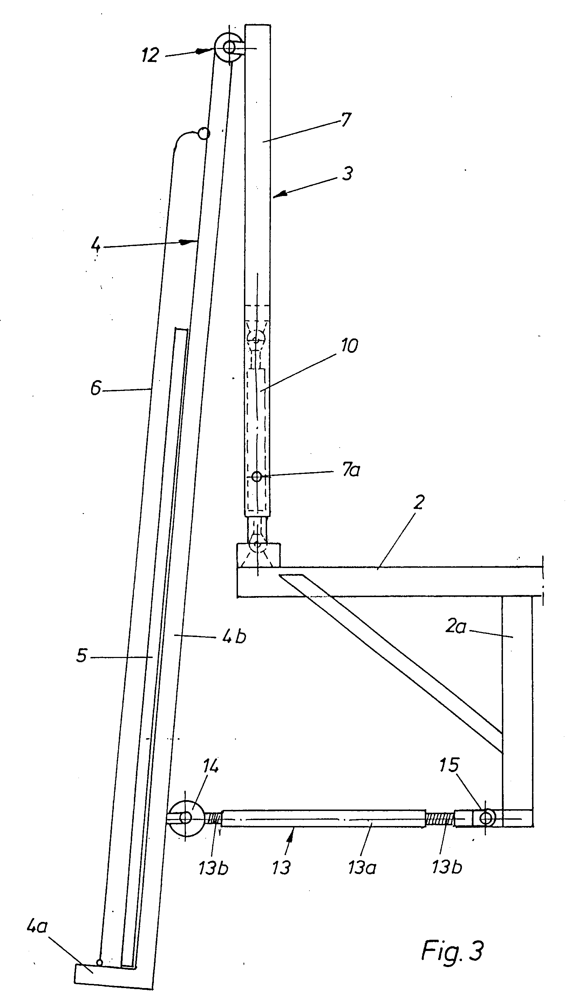

Das in Figur 1 insgesamt mit 1 angedeutete Fahrzeug besitzt die Pritsche 2, auf der das insgesamt mit 3 bezeichnete Hubgestell angeordnet ist. An dem Hubgestell 3 befestigt ist das mit 4 bezeichnete Seitenreff. (Fig.2, Fig.3) Das Seitenreff 4 ist im Querschnitt L-förmig ausgebildet, wobei die Glasscheibe 5 auf dem kurzen Schenkel 4a aufsteht und an dem langen Schenkel 4b des Reffs 4 anliegt. Während des Transports wird die Glasscheibe 5 durch den Bügel 6 gehalten. Das Hubgestell 3 besitzt die beiden Teleskopstützen 7,8, die durch die Traverse 9 und die Stützträger 9a, 9b miteinander verbunden sind. Auf der Pritsche 2 befindet sich die als Kolbenzylinderantrieb ausgebildete Hubeinrichtung 10, die an der Traverse 9 angreift. Im oberen Ende der Teleskopstützen 7, 8 sind die Drehgelenke 11, 12, angeordnet, an denen das mit 4 bezeichnete Seitenreff drehbar gelagert ist.

Der insgesamt mit 13 bezeichnet Schwenkarm ist einerseits durch das Gelenk 14 mit dem Schenkel 4b des Seitenreffs 4 drehbar verbunden und andererseits durch das Gelenk 15 in einem vertikalen Träger 2a der Pritsche 2 gelenkig angeordnet. Der Schwenkarm 13 besteht aus der Gewindehülse 13a und zwei in die Gewindehülse 13a eindrehbare Gewindebolzen 13 b.

Durch Verdrehen der Gewindehülse 13a gegenüber den Schraubbolzen 13b wird es nunmehr möglich, den Winkel des Seitenreffs relativ zur Lotrechten zu verändern. Während des Transportes befindet sich das Seitenreff in der in Figur 2 dargestellten Position; zum Entladen wird das Seitenreff, wie in Figur 3 dargestellt, abgesenkt, wobei durch den Schwenkarm 13 das Reff 4 während des Absenkvorganges nach außen verschwenkt wird, mithin das Seitenreff einen größeren Winkel zur Vertikalen bildet, als dies beim Transport der Fall ist. Um zu gewährleisten, daß es während des Transportes nicht zu einem unbeabsichtigten Absenken des Hubgestells kommt, beispielsweise wenn die Wirkung des Kolbenzylinderantriebes nachläßt, ist vorgesehen, daß die Teleskopstützen 7,8 mittels eines Bolzens 7a,8a verriegelbar sind.

## Patentansprüche

1. Reff, insbesondere Seitenreff, für ein Fahrzeug zur Aufnahme von plattenförmigen Gegenständen, z. B. Glasscheiben,
**dadurch gekennzeichnet,** daß
das Reff (4) relativ zum Fahrzeug (1) absenkbar von dem Fahrzeug (1) aufnehmbar ist.

2. Reff, insbesondere Seitenreff, nach Anspruch 1,
**dadurch gekennzeichnet,** daß
das Fahrzeug (1) ein Hubgestell (3) aufweist, das mit dem Reff (4) in Verbindung steht.

3. Reff, insbesondere Seitenreff, nach Anspruch 2,
**dadurch gekennzeichnet,** daß
das Hubgestell (3) Teleskopstützen (7,8) und eine Hubeinrichtung (10) aufweist.

4. Reff, insbesondere Seitenreff, nach Anspruch 3,
**dadurch gekennzeichnet,** daß
die Teleskopstützen (7,8) verriegelbar sind.

5. Reff, insbesondere Seitenreff, nach Anspruch 3,
**dadurch gekennzeichnet,** daß
die Hubeinrichtung (10) als Kolben-Zylinderantrieb ausgebildet ist.

6. Reff, insbesondere Seitenreff, nach Anspruch 1 oder Anspruch 2,
**dadurch gekennzeichnet,** daß
das Reff (4) gegenüber der vertikalen vom Fahrzeug (1) weg verschwenkbar absenkbar ist.

7. Reff, insbesondere Seitenreff, nach Anspruch 6,
**dadurch gekennzeichnet,** daß
das Reff (4) durch einen Schwenkarm (13) mit dem Fahrzeug (1) in Verbindung steht.

8. Reff, insbesondere Seitenreff, nach Anspruch 7,
**dadurch gekennzeichnet,** daß
der Schwenkarm (13) in einer Länge veränderbar ist.

9. Reff, insbesondere Seitenreff, nach Anspruch 6,
**dadurch gekennzeichnet,** daß
das Reff (4) gelenkig (bei 11,12) mit dem Hubgestell (3) verbindbar ist.

10. Reff, insbesondere Seitenreff, nach Anspruch 7,
**dadurch gekennzeichnet,** daß
der Schwenkarm (13) gelenkig (bei 14,15) mit dem Fahrzeug (1) und dem Reff (4) verbindbar ist.
